# EUROPÄISCHE PATENTSCHRIFT

(11) **EP 1 006 241 B1**
(45) Veröffentlichungstag und Bekanntmachung des Hinweises auf die Patenterteilung: **14.04.2004**
(21) Anmeldenummer: 99123891.6
(22) Anmeldetag: 02.12.1999
(51) Int. Cl.: E03C 1/02

(54) **Sanitärarmatur mit Schalldämpfer**
Sanitary fitting with noise suppressor
Armature sanitaire avec amortisseur de bruit

(30) Priorität: 05.12.1998 DE 19856154
(43) Veröffentlichungstag der Anmeldung: 07.06.2000
(73) Patentinhaber: Hansgrohe AG, 77761 Schiltach (DE)
(72) Erfinder: Kronenbitter, Bernd, 72275 Alpirsbach-Römlinsdorf (DE)
(74) Vertreter: Patentanwälte Ruff, Wilhelm, Beier, Dauster & Partner

(56) Entgegenhaltungen:
- DE-A- 3 330 963
- DE-A- 3 741 289
- DE-A- 4 127 629

## Beschreibung

Es ist bekannt, den durch strömendes Wasser in Sanitärarmaturen entstehenden Schall durch Schalldämpfer zu verringern, die beispielsweise in Hohlräume eingebaut werden. Die Schalldämmung wird dadurch erreicht, dass luftgefüllte Räume vorhanden sind, in die das Wasser bei Druckstößen sich ausdehnen kann. Bei einer bekannten Sanitärarmatur (DE 3330963) ist der Schalldämpfer als gleichzeitig als Dichtung wirkendes Bauteil zwischen zwei Teile einer Sanitärarmatur eingebaut.

Ebenfalls bekannt ist ein Schalldämpfer für eine Sanitärarmatur (DE 4127629), der mit Hilfe eines Schraubstöpsels in einen wasserdurchflossenen Durchgang der Sanitärarmatur eingesetzt werden kann.

Der Erfindung liegt die Aufgabe zugrunde, eine einfach aufgebaute Snitärarmatur zu schaffen, bei der sich das Anbringen und Auswechseln eines Schalldämpfers einfach gestalten lässt.

Zur Lösung dieser Aufgabe schlägt die Erfindung eine Sanitärarmatur mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Die Wirkungsweise des Schalldämpfers besteht darin, dass Druckstöße in der Wassersäule durch Komprimieren der Luft in dem durch den Schalldämpfer abgeschlossenen Hohlraum aufgenommen werden können. Dieser Hohlraum ist bei der Erfindung dadurch zugänglich, dass man die Sanitärarmatur von dem Anschlussblock löst. Es ist daher möglich, einerseits den Hohlraum bei der Produktion der Sanitärarmatur mit geringem konstruktivem Aufwand herzustellen und andererseits ihn auch nachträglich zu überprüfen und ggf. zu reinigen. Es ist möglich, den Zugang zu dem Hohlraum von seiten der Sanitärarmatur so zu gestalten, wie dies für die Schalldämpfung benötigt wird, ohne Rücksicht auf die Herstellbarkeit zu nehmen.

Insbesondere kann in Weiterbildung der Erfindung vorgesehen sein, dass der Schalldämpfer von der Trennfläche aus in den Hohlraum eingesetzt werden kann. Dies macht ein nachträgliches Auswechseln besonders einfach. Die Öffnung zwischen dem Hohlraum und einem Wasser führenden Kanal der Sanitärarmatur kann verkleinert werden, da der Schalldämpfer nicht durch diese Öffnung eingesetzt zu werden braucht.

In nochmaliger Weiterbildung der Erfindung kann vorgesehen sein, dass der Schalldämpfer zwischen dem Anschlussblock und dem Armaturenkörpers festlegbar ist. Dies kann beispielsweise in einer Stufe erfolgen, die nach Befestigen der Armatur an dem Anschlussblock eine ringförmige Nut bildet.

In nochmaliger Weiterbildung der Erfindung kann vorgesehen werden, dass sich der Hohlraum über die Trennfläche zwischen beiden Armaturenteilen hinaus in den Anschlussblock fortsetzt. Er kann dort eine Vertiefung, ein Sackloch oder dgl. bilden. Auf diese Weise kann trotz nicht vergrößerter Bauhöhe der Sanitärarmatur eine tiefer Hohlraum gebildet werden, der die Wirkung des Schalldämpfers verbessert.

Erfindungsgemäß kann vorgesehen sein, dass der Hohlraum nach montierter Armatur in einen durchströmten Kanal mündet. Der Schalldämpfer liegt also nicht selbst in einem durchströmten Durchgang, so dass er bei Zerstörung auch keine Verstopfung herbeiführen kann.

Insbesondere kann vorgesehen sein, dass der Hohlraum zylindrisch ausgebildet ist, insbesondere kreiszylindrisch.

Erfindungsgemäß kann vorgesehen sein, dass der Schalldämpfer die Form eines Faltenbalgs aufweist, was bedeutet, dass die Dämpfung der Druckstöße in erster Linie nicht durch eine Verformung des Schalldämpfers, sondern durch eine Komprimierung eines Luftpolsters erfolgt.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: eine Aufsicht auf einen Anschlussblock mit vier Anschlüssen und vier Vertiefungen;
- Fig. 2: einen teilweise abgebrochenen abgewinkelten Schnitt durch die Anordnung der Fig. 1 längs Linie II-II in Fig. 1;
- Fig. 3: in vergrößertem Maßstab einen Axialschnitt durch den in Fig. 2 vereinfacht dargestellten Schalldämpfer.

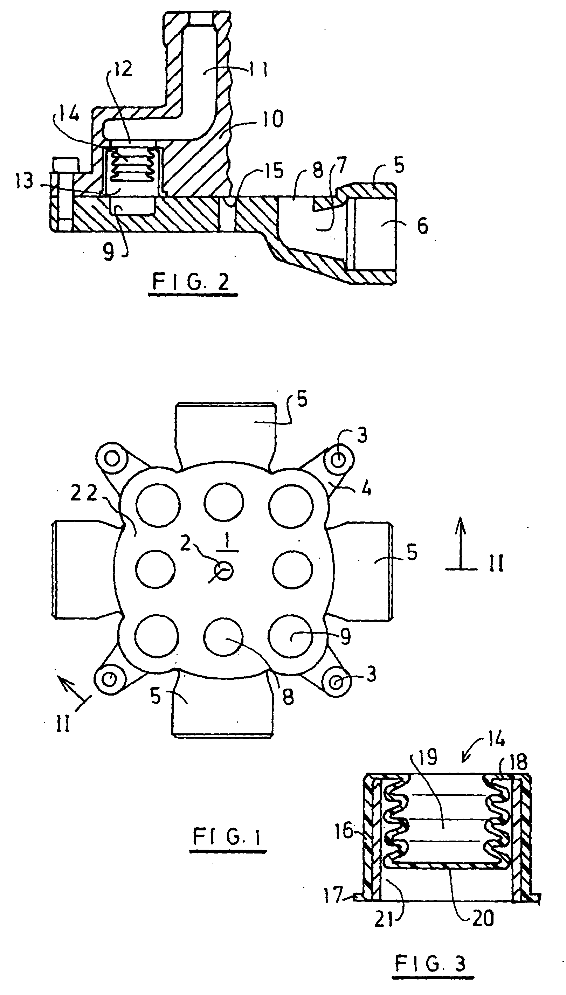

Figur 1 zeigt eine Aufsicht auf einen Anschlussblock 22 , der zum Einbau in eine Wand gedacht ist, wobei die in Figur 1 zu sehende Fläche 1 dann vertikal verläuft. Der Anschlussblock 22 enthält eine zentrale senkrecht zu der Fläche 1 verlaufende Gewindebohrung 2, die in der Mittelachse des Anschlussblocks 22 verläuft. An dem Anschlussblock 22 kann eine Sanitärarmatur befestigt werden, die beispielsweise mit Hilfe einer in diese Gewindebohrung 2 eingreifenden Schraube festgeschraubt wird. Zur weiteren Befestigung sind vier Gewindebohrungen 3 an Ansätzen 4 vorgesehen.

Radial gegenüber der Achse der Gewindebohrung 2 verlaufen vier Anschlüsse 5, die mit einem Innengewinde 6 versehen sind und in die Wasserleitungen einer Hausinstallation eingeschraubt werden können. Anstelle der mit einem Innengewinde versehenen Anschlüsse könnten auch Anschlüsse mit Steckaufnahmen vorhanden, in die die Wasserleitungen der Hausinstallation eingesteckt und gegebenenfalls verlötet werden. Jeder Anschluss 5 steht über einen Durchgang 7 mit einer in der ebenen Fläche 1 ausmündenden Durchgangsöffnung 8 in Verbindung. Bei den Durchgängen 7 kann es sich um Durchgänge handeln, durch die Wasser aus der Wasserleitung in die Sanitärarmatur gelangt, oder auch um Durchgänge, durch die das Wasser aus der Sanitärarmatur in eine weiterführende Leitung gelangt. Dies hängt allein von der Konstruktion der Sanitärarmatur ab.

Winkelmäßig mittig zwischen je zwei Anschlüssen 5 sind die bereits erwähnten Ansätze 4 mit den Gewindebohrungen 3 angeordnet. Zwischen der Mittelachse des Anschlussblocks und jedem Ansatz 4 ist in der Fläche 1 jeweils eine Ausnehmung 9 ausgebildet, die als kreiszylindrisches Sackloch geformt ist.

Fig. 2 zeigt in einem Schnitt, der durch ein Sackloch 9 gelegt ist, einen Teil einer Sanitärarmatur 10 mit einem ersten Hohlraum 11. Der Hohlraum 11, bei dem es sich auch um einen durchströmten oder teilweise durchströmten Kanal handeln kann, steht über eine Öffnung 12 mit einem Hohlraum 13 in Verbindung. In dem Hohlraum 13 ist ein Schalldämpfer 14 angeordnet. Die Funktion des Schalldämpfers wird später noch erläutert werden. Der Hohlraum 13 ist in Richtung auf die Endfläche 15 des Armaturenkörpers offen. Der Hohlraum 13 ist an einer Stelle des Armaturenkörpers angeordnet, die nach der Montage des Armaturenkörpers mit der das Sackloch bildenden Ausnehmung 9 fluchtet.

Der Hohlraum 13 weist ebenfalls die Form eines Kreiszylinders auf. Bei abgenommenen Armaturenkörper kann der Schalldämpfer 14 von der Endfläche 15 her in den Hohlraum 13 eingesetzt und auch wieder entnommen werden. Die Öffnung 12 weist.einen kleineren Durchmesser auf als der Hohlraum 13.

Einzelheiten des Schalldämpfers 14 sind in Figur 3 zu sehen, die einen Axialschnitt durch den Schalldämpfer 14 zeigt. Der Schalldämpfer 14 weist die Form einer zylindrischen Hülse 16 auf, die kreiszylindrisch ausgebildet ist und an ihrem einen Ende einen nach außen gerichteten umlaufenden Flansch 17 aufweist. Im Bereich ihres gegenüberliegenden Endes ist ein ringförmiger ebener Teil 18 ausgebildet, an den sich der eigentliche nach innen gestülpte Faltenbalg 19 anschließt. Abgeschlossen ist der Faltenbalg 19 durch eine ebene Stirnfläche 20. Auf der Innenseite der Hülse 16 ist eine metallische Hülse 21 angeordnet, oder einer Hülse aus einem starren Material. Denkbar ist auch, den Schalldämpfer im Bereich seiner Hülse 16 durch andere Mittel zu verstärken. Der Vorteil des Faltenbalgs 19 liegt darin, dass er sich fast widerstandslos verformen läßt. Die Druckstöße in dem Wasser, die in Figur 3 auf der Oberseite der Endfläche 20 einwirken, führen zu einer Verformung des Faltenbalgs und damit zu einer Komprimierung der in dem Hohlraum 13 zwischen dem Faltenbalg und der Ausnehmung 9 eingeschlossenen Luft.

Bei der dargestellten Ausführungsform ist der Hohlraum in Richtung des Anschlussblocks 22 geschlossen. Der Wasserdruck wirkt also durch den Durchgang 11 auf den Schalldämpfer.

Es ist ebenfalls möglich und wird von der Erfindung vorgeschlagen, den Hohlraum 13 zu der Sanitärarmatur hin geschlossen auszubilden und ihn über eine durch den Anschlussblock 22 hindurch führende Leitung mit einem durchströmten Kanal zu verbinden. Auch dann ist der Vorteil gegeben, dass sich der Schalldämpfer von der Trennfläche 15 aus in den Hohlraum 13 einsetzen lässt.

## Patentansprüche

1. Sanitärarmatur, mit
1.1 einem Anschlussblock, der
1.1.1 Anschlüsse (5) zur Verbindung mit der Hausinstallation,
1.1.2 eine Trennfläche (1) und
1.1.3 in dieser mündende Durchgangsöffnungen (8) aufweist,
1.2 einem Armaturenkörper (10), der
1.2.1 eine Trennfläche (15) zur Anbringung an der Trennfläche (1) des Anschlussblocks und
1.2.2 Kanäle aufweist, sowie mit
1.3 einem Schalldämpfer (14),
**dadurch gekennzeichnet, dass**
1.4 der Schalldämpfer in einen endseitig abgeschlossenen Hohlraum (13) hinein verformbar ist, der
1.4.1 mindestens teilweise in dem Armaturenkörper (10) ausgebildet und
1.4.2 zu dessen Trennfläche (15) hin offen ist.

2. Sanitärarmatur nach Anspruch 1, bei der der Schalldämpfer (14) von der Trennfläche (15) aus in den Hohlraum (13) einsetzbar ist.

3. Sanitärarmatur nach Anspruch 1 oder 2, bei der der Schalldämpfer (14) zwischen dem Anschlussblock und dem Armaturenkörper (10) festlegbar ist.

4. Sanitärarmatur nach einem der vorhergehenden Ansprüche, bei der sich der Hohlraum (13) in den Anschlussblock hin fortsetzt.

5. Sanitärarmatur nach einem der vorhergehenden Ansprüche, bei der der Hohlraum (13) in einem bei Gebrauch durchströmten Kanal mündet.

6. Sanitärarmatur nach einem der vorhergehenden Ansprüche, bei der der Hohlraum (13) zylindrisch, insbesondere kreiszylindrisch, ausgebildet ist.

7. Sanitärarmatur nach einem der vorhergehenden Ansprüche, bei der der Schalldämpfer (14) die Form eines Faltenbalgs aufweist.

## Claims

1. Sanitary appliance with
1.1 a connection block, which has
1.1.1 connections (5) linking it to the domestic installation,
1.1.2 a joint interface (1) and
1.1.3 passage apertures (8) that issue onto this,
1.2 an appliance body (10) that has
1.2.1 a joint interface (15) applied to joint interface (1) of the connection block, and
1.2.2 channels, as well as
1.3 a sound absorber (14),
is **characterised in** such a way that
1.4 the sound absorber can be distorted in a cavity (13) that is closed off at one end, which
1.4.1 is at least partially formed in section of sanitary appliance (10), and
1.4.2 is open in the direction of its joint interface (15).

2. Sanitary appliance in accordance with Claim 1, in which sound absorber (14) can be installed from joint interface (15) into cavity (13).

3. Sanitary appliance in accordance with Claim 1 or 2, in which sound absorber (14) can be installed between the connection block and the body of the appliance (10).

4. Sanitary appliance in accordance with one of the above Claims, in which cavity (13) continues into the connection block.

5. Sanitary appliance in accordance with one of the above Claims, in which cavity (13) issues onto a channel through which water flows when in use.

6. Sanitary appliance in accordance with one of the above Claims, in which cavity (13) is executed cylindrically, in particular as a circular cylinder.

7. Sanitary appliance in accordance with one of the above Claims, in which sound absorber (14) has the form of an expansion bellows.

## Revendications

1. Armature sanitaire avec
1.1 un bloc de raccordement qui présente
1.1.1 des raccords (5) pour la liaison avec l'installation de la maison,
1.1.2 une surface de séparation (1) et
1.1.3 des ouvertures de passage (8) débouchant sur celle-ci,
1.2 un corps d'armature (10), qui présente
1.2.1 une surface de séparation (15) pour l'installation sur la surface de séparation (1 ) du bloc de raccordement et
1.2.2 des canaux, ainsi qu'avec
1.3 un silencieux (14),
**caractérisée par le fait que**
1.4 le silencieux est déformable dans un espace creux (13) fermé à son extrémité, qui
1.4.1 est formé au moins partiellement dans le corps de l'armature (10) et
1.4.2 est ouvert en direction de sa surface de séparation (15).

2. Armature sanitaire selon la revendication 1, sur laquelle le silencieux (14) peut être installé dans l'espace creux (13) à partir de la surface de séparation (15).

3. Armature sanitaire selon la revendication 1 ou 2, sur laquelle le silencieux (14) peut être fixé entre le bloc de raccordement et le corps de l'armature (10).

4. Armature sanitaire selon l'une des revendications précédentes, sur laquelle l'espace creux (13) se poursuit dans le bloc de raccordement.

5. Armature sanitaire selon l'une des revendications précédentes, sur laquelle l'espace creux (13) débouche dans un canal traversé lors de l'utilisation.

6. Armature sanitaire selon l'une des revendications précédentes, sur laquelle l'espace creux (13) est conçu de façon cylindrique, en particulier rond cylindrique.

7. Armature sanitaire selon l'une des revendications précédentes, sur laquelle le silencieux (14) présente la forme d'un soufflet d'intercirculation.
